# EUROPEAN PATENT SPECIFICATION

(11) **EP 1 748 005 B1**
(45) Date of publication and mention of the grant of the patent: **22.09.2010**
(21) Application number: 06116884.5
(22) Date of filing: 10.07.2006
(51) Int. Cl.: B65G 1/06, B65G 19/02

(54) **Pallet rack with conveyor**
Gestell für Stapelplatten mit Förderer
Rayonnage à palettes avec convoyeur

(30) Priority: 25.07.2005 NL 1029601
(43) Date of publication of application: 31.01.2007
(73) Proprietor: Hovuma Magazijnstellingen B.V., 5953 NN Reuver (NL)
(72) Inventor: Sanders, Peter Wilhelmus Marie, NL-5971 AV, Grubbenvorst (NL)
(74) Representative: Smeets, Eugenius Theodorus J. M.

(56) References cited:
- WO-A-96/37422
- CH-A5- 605 350
- JP-A- 5 105 209
- JP-A- 58 177 818
- US-A- 5 538 384
- US-A- 5 915 516

## Description

### BACKGROUND OF THE INVENTION

The invention relates to a push-through conveyor frame for accommodating pallets in pallet positions which are organized along tracks having a track's axis and the pallets having two outer sides in a direction transverse to the track's axis, wherein two tracks supports the accommodated pallets adjacent the outer sides thereof, all this as further defined in the opening section of claim 1 and as disclosed in document CH 60 5350 A. The use of such pallets renders it possible to organize the transport, storage, conditioning, etc. of various products in a modular manner. Many pallet dimensions have been defined for a variety of products. The quality of the pallets is often not high (especially in the case of comparatively inexpensive products such as vegetables and fruit). Often they are throw-away pallets of low-grade wood which are used only once. The pallets are introduced one by one into the frame mentioned above by means of a forklift truck or the like. This implies that the previous pallet(s) in the track has (have) to move along upon the introduction of the next pallet such that their relative movements remain negligibly small.

The inventor has come to realize, however, that the indifferent quality of the pallets gives rise to various problems. Thus pieces of the pallet deck (on which the products are placed) or of the pallet substructure may break off. The risk of the drive mechanism becoming obstructed must remain low in spite of this. Furthermore, an earlier pallet is often pushed along by an arriving next pallet. This does not always function correctly, especially in the case of a pallet substructure having a light construction. When a pallet is to be returned in backward direction, all pallets of a track have to be moved back. Collectively operating drive means are required particularly in this latter case.

### SUMMARY OF THE INVENTION

According to one aspect of the invention, therefore, it is among the objects of the invention to fix the pallets substantially relative to one another by drive means that operate in a simple manner, while there is still sufficient space for displacing the pallets into and from the track, for example by means of a fork-lift truck.

In one of its aspects, the present invention is thus characterized in that said drive means comprise a continuous chain which is present below the pallet positions in an intermediate position between the two tracks and which is provided with fixation points capable of penetrating the pallet material in upward direction and thus are counteracting movements of consecutive pallets relative to one another, while the two track's that support the accommodated pallets at the outer sides thereof are free of such fixation points, in that said chain comprises one or several rollers per link, which roller or rollers is or are provided on a common shaft in said transverse direction, in that a supporting track is provided for said link rollers for the purpose of bearing part of the pallet weight and in that grooves are provided in axial direction of the track for the shafts of said link rollers along a return track so as to guide the links along a substantially straight line. Such a passively operating fixation is particularly effective for pallets made of soft wood and similar materials. No driving force is required in many cases other than the force of the fork-lift truck which is necessary anyway for introducing and removing the pallets. The combination of a continuous chain with a passive end support for the pallets is inexpensive and is found to be practically achievable with a sufficiently low friction. Such a comparatively open construction renders it possible for broken-off fragments of the pallets to drop through the respective components of the frame without causing an obstruction of the drive.

US 6,209,712 B1, published April 3^{rd}, 2001, describes the provision of projections on a plurality of continuous chains of a transporter between storage racks. The projections, however, are comparatively small, so that the retaining function of the fixation points of the invention is not achieved: a penetration of the pallet material does not take place. This is the more important when the drive is to take place in backward direction. This often happens when a fork-lift truck slightly lifts the last pallet (at the exit side) and retracts it. The fixation of the last pallet must be maintained especially during this. According to the invention, moreover, the separation of the drive function (intermediate / central position) and the support function (adjacent the outer side / at the end) is favorable in many respects: it is found that the pallets can be better transported, and breaking off of pallet fragments less often leads to an interruption of their movement. The support function, finally, can be realized in a comparatively inexpensive manner owing to this separation.

It is further noted that a push back storage assembly is known from US 5,915,516 B1, published June 29, 1999. In this assembly pallets are supported at the outer sides thereof by tracks containing roller chains that are provided with jagged projections on top in order to improve the non-positive connection between the roller chains and the pallet received thereon.

In addition it is noted that another push back storage assembly is known from CH 605350, published on September 29, 1978. In this assembly two outer tracks containing roller conveyors bear the pallets received thereon while a central flat belt conveyor is - preferably locally - provided with means for increasing the friction between said central flat belt conveyor and the pallets, said means comprising a brush.

Preferably, said drive means comprise only one such chain, which extends substantially along the length of the track. This is found to be an inexpensive solution of a satisfactory quality. The support function adjacent the outer sides may then be advantageously fulfilled by roller tracks, preferably in the form of roller chains. It is furthermore conceivable, for example, that pallets of a synthetic material are supported adjacent their outer sides by metal strips, which then at the same time act as sliding surfaces.

In a preferred embodiment, said penetration is activated by the weight of a loaded pallet and/or the bending movement thereof. An optimum utilization of the properties of low-quality, i.e. soft wood enables the invention to take effect without further measures.

In a further preferred embodiment, said chain is located substantially centrally between said outer sides. This combines well with the construction of most pallets, which usually have 3 x 3 supports between the deck and the bottom laths below them. It is also well suited to the pallets especially if a central support lath thereof is located above the chain and in the direction of the track. In such a case, the expression 'substantially centrally' means that the chain is out of center by not more than approximately half the width of the bottom lath. This may amount to a tolerance of, for example, +/- 10 to 15 cm with respect to the center.

In a further preferred embodiment, said chain lies recessed in a supporting beam. This results in an inexpensive and robust construction in which the beam may be, for example, of wood, synthetic resin, or metal. Wood is useful in e.g. refrigerated compartments because of its low heat capacity and is easy to work.

In a further preferred embodiment, said chain is provided over substantially its entire length with fixation points arranged on each chain link. A FIFO (First In First Out) arrangement is made possible thereby, with inlet and outlet at mutually opposed ends of the track. In the case of a LIFO (Last In First Out) arrangement, there is a section of the chain that need not be brought into contact with the pallets, which section may then be constructed without fixation points, if so desired.

In a further preferred embodiment, said chain is built up from roller-type link modules consecutively arranged in transverse direction for each chain link, while said fixation points are positioned between consecutive link modules and at the ends thereof each time. Such a modular construction of the links renders it possible to dimension the frame for heavier and for lighter pallets. The difference in weight between, for example, citrus fruits and grapes may be considerable: a heavier construction would then be chosen for the former.

The invention also relates to an assembly kit as claimed in claim 12 suitable for constructing a push-through conveyor frame as claimed in claim 1 in combination with an assembly provided with stationary components. The stationary components of the assembly may be present already, in which case the application of the invention constitutes an improvement. The assembly kit may comprise, for example, a continuous chain, or one that can be made continuous, with fixation points, possibly two supporting conveyor tracks to be mounted laterally, and furthermore possibly a suitable selection of mounting and adjustment materials. Further advantageous aspects of the invention are recited in the dependent claims.

### SHORT DESCRIPTION OF THE DRAWING

The above and further properties, aspects, and advantages of the invention will now be explained in more detail below in the description of preferred embodiments of the invention, and more in particular with reference to the appended Figures, in which corresponding components have been given corresponding reference numerals, and in which:
Fig. 1 is a general view of a push-through conveyor frame taken transversely to the direction of the track;
Fig. 2 is a general view of a push-through conveyor frame taken in the direction of the track;
Fig. 3 shows the general configuration of a push-through conveyor frame according to the invention;
Figs. 4a, 4b show components of the conveyor frame of Fig. 3 in more detail;
Figs. 5a-c show details of the drive mechanism; and
Fig. 6 shows details of the conveyor tracks.

### DETAILED DESCRIPTION OF THE PREFERRED EMBODIMENT

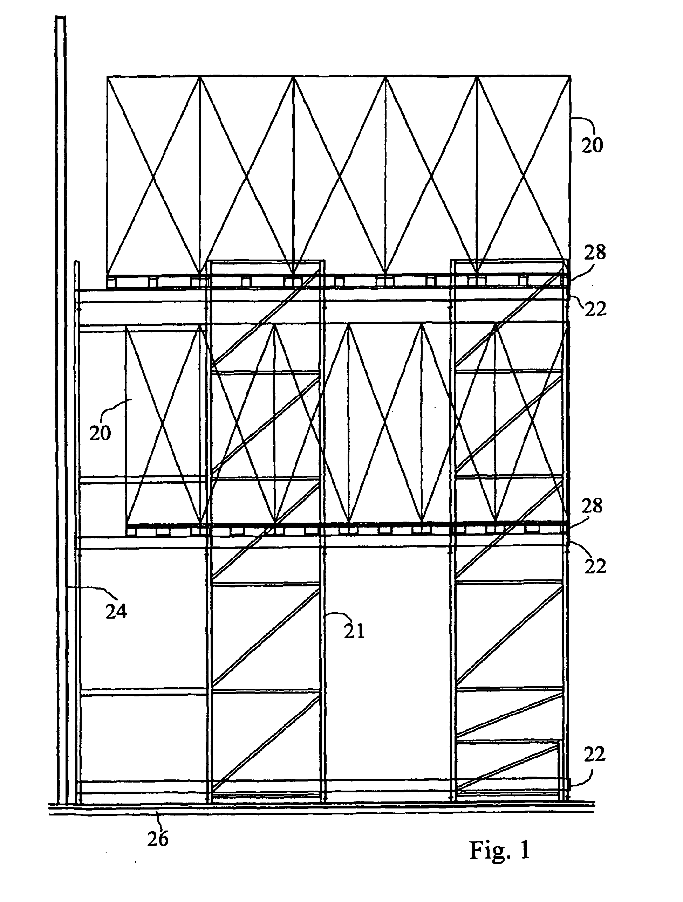

Fig. 1 gives a general picture of a push-through conveyor frame viewed transversely to the track direction. The expression 'push-through' here denotes that, when a new pallet is placed in a track, all pallets already present in this track must be shifted along by one position. It is possible in principle both that pallets are removed at the input side (LIFO) and that pallets are removed at the other side (FIFO). It is assumed in the ensuing description that the former is the case, but those skilled in the art will immediately perceive the feasibility of the alternative configuration and its possibilities.

The frame as shown has three levels, of which the upper two are occupied by filled pallets 20 of two mutually different dimensions, the pallets proper being referenced '28'. Reference numeral 22 indicates the pallet tracks, 21 the general construction, 26 the floor, and 24 a closed rear wall. The various standard dimensions, weights to be supported, and subassemblies of the pallets may be derived from the general literature.

Loading and unloading of the pallets will now be briefly described. For loading, the pallet is first moved to straight in front of the track at the correct height by means of a fork-lift truck. The pallet is then introduced in that it is driven forward, during which the central support lath is kept in central position. The forks of the fork-lift truck are horizontal during this, and the newly inserted pallet makes contact with the previously inserted pallet, and so on between all pallets present. The latter are thus all shifted one position further. Once the new pallet has been inserted sufficiently far, it is lowered until it anchors itself in the chain with teeth. The fork-lift truck can then be backed away.

For unloading, the fork-lift truck is again centrally positioned in front of the track, and the forks are horizontally inserted into the free spaces in the substructure of the pallet. The forks are not allowed to touch the second pallet in the track here. Then the vertical fork lift shaft (along which the connection points of the forks can move up and down) is tilted forward and the forks are slightly lifted, so that the outermost (front) edge of the pallet is slightly lifted, but the rest of the pallet still rests on the drive chain.

The fork-lift truck is now slowly driven back, whereby the pallet is dragged along, during which the inner (rear) portion of the pallet still rests on the fixation points, so that the drive chain is taken along in the movement. The other pallets will thus also move along with the drive chain. When the frontmost pallet has thus become substantially clear of the track, the shaft of the fork-lift truck can be tilted back again, and the pallet becomes detached from the chain track. The pallet can then be removed. An optional slope in the drive track towards the delivery position may make it even easier for the remaining pallets to move along. This arrangement, however, is not always necessary. The slope will be in the other (exit) direction in the case of a FIFO construction.

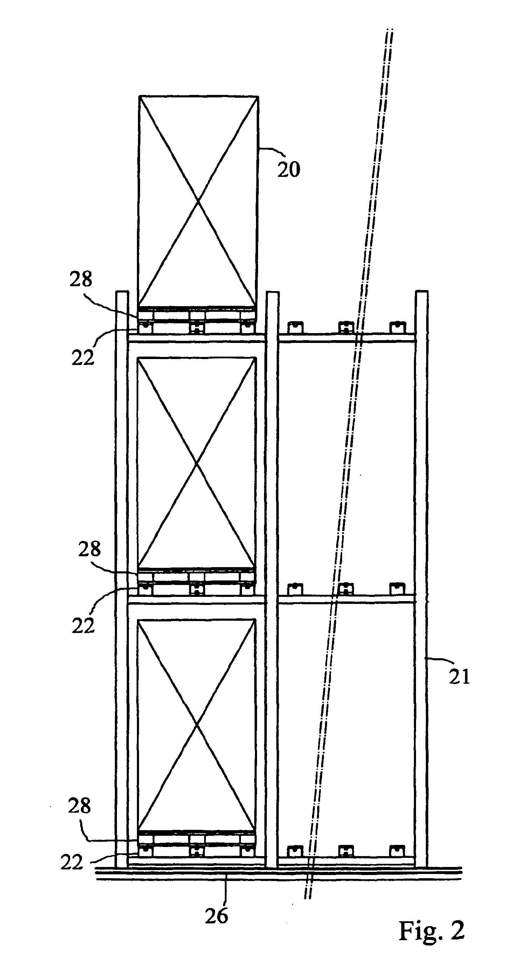

Fig. 2 presents a general view of a push-through conveyor frame taken in the direction of the track, again with filled pallets 20 with pallet constructions 28, conveyor tracks 22, a general construction 21, and a floor 26. The number of pallet tracks next to one another (two in this case) and above one another (three in this case) as well as the number of pallets that can be placed in each track may be freely chosen in principle.

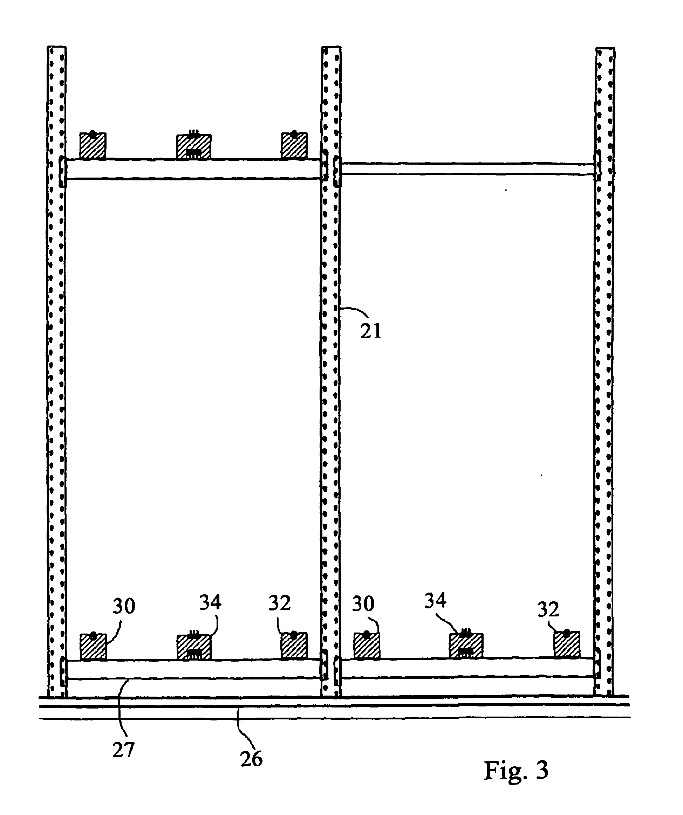

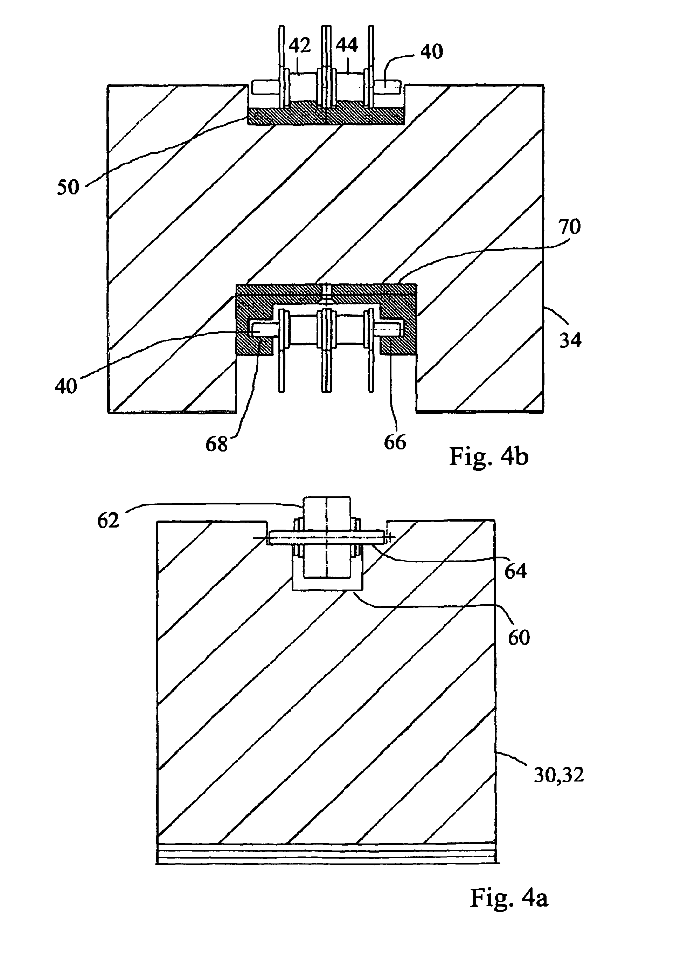

Fig. 3 illustrates the general configuration of a push-through conveyor frame according to the invention, being a further development of Fig. 2. The construction 21 comprises besides vertical support poles also horizontal supports 27 for the tracks. Two outer conveyor tracks 30, 32 (provided with rollers in this embodiment, cf. Fig. 4b) are provided for each track so as to provide a suitable outer support for the pallets. Furthermore guide means are shown, in the form of a beam 34 provided with a continuous chain, which will be elaborated in detail in Fig. 4a. The not inconsiderable filling weight of the pallets and their comparatively low-grade construction will cause the pallets to sag somewhat at the area of the continuous chain. This is used to advantage in the invention. The relative levels of the elements 30, 32, 34 may be adjusted in a known manner by means of fillers or the like.

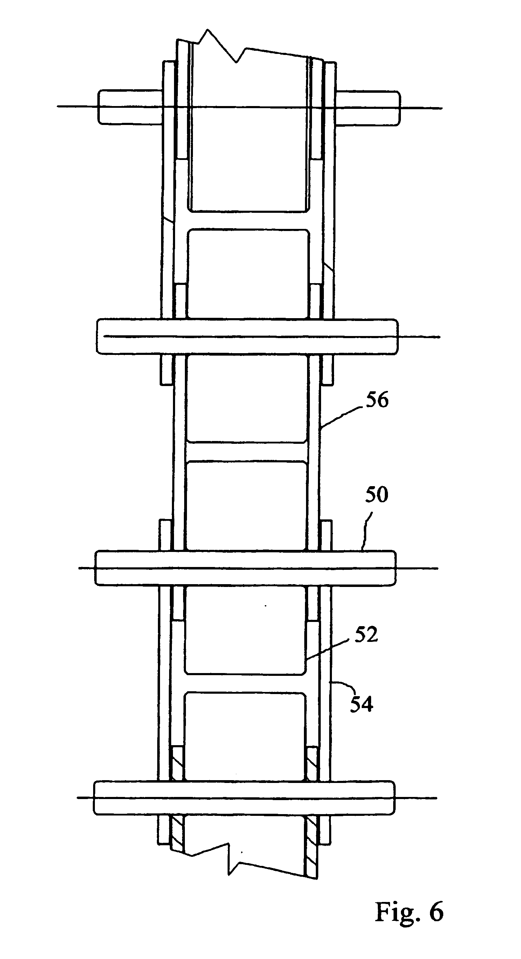

Figs. 4a and 4b show components of the push-through conveyor frame of Fig. 3 in more detail. Fig. 4a shows the conveyor tracks 30, 32. These each consist of a beam of some suitable material, such as steel, stainless steel, duraluminum, or possibly wood, the latter e.g. for use in spaces with temperature control such as cold storage compartments. A groove 60 is provided in the beam, in which groove rollers 62 can support the pallets while rolling. The shaft 64 of each roller is fixed in vertical direction, for example by means of a plain bearing, cf. Fig. 6. The rollers are preferably incorporated in a chain of which each link comprises a roller module and which is kept taut by respective connections fixed to the ends of the beam: i.e. this chain does not move. The roller modules further reduce the friction for the pallets resting thereon.

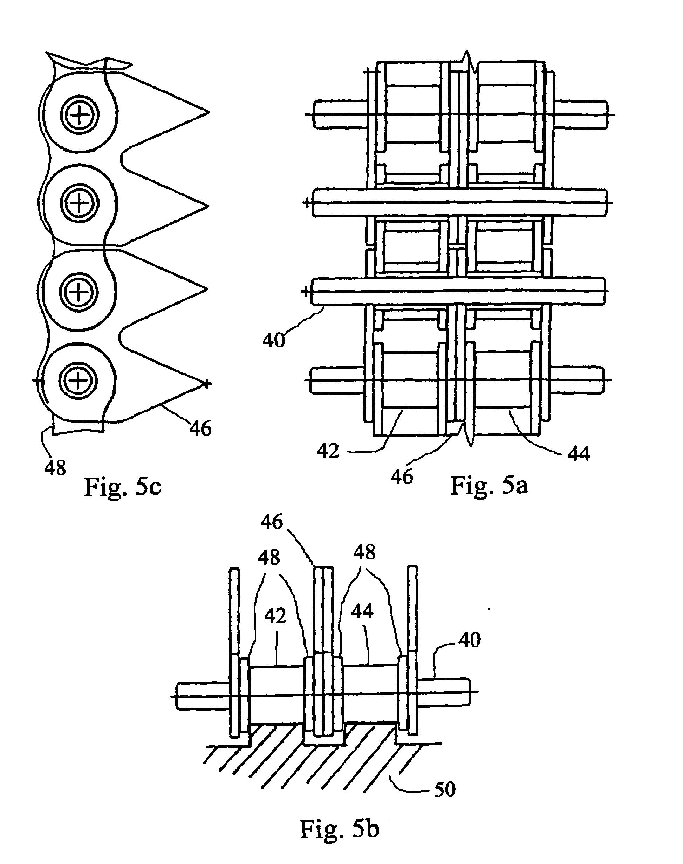

Fig. 4b shows the arrangement of the beam 34 provided with the drive chain of Fig. 3 in more detail. The active side faces upwards in the Figure, which also shows roller-type link modules 42, 44 and a shaft 40. The chain is returned at the lower side of the beam 34. To keep the chain substantially straight, two grooves 66, 68 for the shafts 40 (see also Fig. 5a) are provided therein. Returning gearwheels at the beginning and end of the central beam 34 have not been shown for simplicity's sake. The recessed portions 50 and 70 may be made from a suitable material, such as synthetic resin.

Figs. 5a-c illustrate details of the drive means. In this embodiment, each link of the chain comprises two roller-type link modules 42, 44 which have their bearings on a shaft 40. The chain itself is formed by links 46 made from metal plating, for example stainless steel. Spacer links 48 are arranged between the link rollers and the links 46 each time, such that the link types 46 and 48 occur in alternation in longitudinal direction, cf. Fig. 5c. The chain can operate in two modes. First, it is possible for the chain to be uniformly coupled in a closed loop. This is necessary, for example, if the supply and delivery of the pallets take place at mutually opposed ends of the track. If the supply and delivery always take place at the same end of the track (LIFO), it is possible in some cases to design part of the circuit more simply because a certain portion of the chain merely serves to complete its loop. This portion may then be formed, for example, by a steel strip.

As is apparent from Fig. 5c, the links 46 are provided with projecting fixation points capable of penetrating the pallet material, whereby the pallets are substantially fixedly retained relative to the chain. The links 48 do not carry these fixation points, but this is not a limitation. As can be seen, these links are of single construction at the outer sides but of double construction in the center. The latter construction serves to realize a greater strength counteracting bending of the fixation points. In an advantageous embodiment, the distance between consecutive teeth is 15 mm and their height above the shaft 20 mm. The teeth may project 15 mm from the shaft in many embodiments. Alternative dimensions are also feasible, as is a different tooth shape, for example a different apex angle and/or tooth outline. A comparatively great tooth dimension and spacing will be favorable in particular for a coarse-fiber pallet material.

Fig. 5b further shows a supporting conveyor track 50 for supporting the link rollers 42, 44 and thus bearing part of the pallet weight. Fig. 5a shows some link rollers in cross-section, others in elevation.

Fig. 6 shows details of the outer conveyor tracks (accommodated in the beams 30, 32 of Fig. 4a). In fact, these constitute simple embodiments of the construction of Fig. 5 with shafts 50, roller link modules 52, and alternating inner and outer links 54, 56, and obviously without teeth. The fixation at the ends of the conveyor tracks has not been shown for simplicity's sake. A supporting element 50 similar to the component referenced 50 in Figs. 4b, 5b may again be provided here.

The invention has been described above with reference to a preferred embodiment thereof. Those skilled in the art will appreciate, however, that that numerous modifications and variations may be provided therein without departing from the scope of the appended claims. The embodiments should accordingly be regarded as illustrative, and no limitations should be inferred therefrom other than those arising from the claims.

## Claims

1. A push-through conveyor frame for accommodating pallets (20, 28) of a pallet material in pallet positions which are organized along tracks (30,32) having a tracks axis and the pallets (20,28) having two outer sides in a direction transverse to the track's axis, wherein two tracks (30,32) support the accommodated pallets adjacent the respective two outer sides thereof, and wherein said push-through conveyor frame is further provided with drive means (34) for mutually equalizing the movements of the pallets (20,28) in at least one of the directions of movement of the pallets along the tracks,
**characterized in that** said drive means (34,40-48) comprise a continuous chain (40-48) which is present below the pallet positions in an intermediate position between the two tracks (30,32) and which is provided with fixation points (46) that are capable of penetrating the pallet material in upward direction and thus are counteracting movements of consecutive pallets (20, 28) relative to one another, while the two tracks (30,32) that support the accommodated pallets at the outer sides thereof are free of such fixation points, wherein said chain comprises one or several rollers (42,44) per link, which roller or rollers is or are provided on a common shaft (40) in said transverse direction, wherein a supporting track (50) is provided for said link rollers for the purpose of bearing part of the pallet weight and wherein grooves (66, 68) are provided in axial direction of the track for the shafts (40) of said link rollers along a return track so as to guide the links along a substantially straight line.

2. A push-through conveyor frame as claimed in claim 1, wherein said drive means (34) comprise only one such chain (40-48), which extends substantially along the length of the tracks (30,32).

3. A push-through conveyor frame as claimed in claim 1, wherein the penetration effect is activated by the weight of a loaded pallet (20,28) and/or the bending movement thereof.

4. A push-through conveyor frame as claimed in claim 1, wherein said chain (40-48) is located substantially centrally between said outer sides of the pallets (20,28).

5. A push-through conveyor frame as claimed in claim 1, wherein said chain (40-48) lies recessed in a supporting beam (34).

6. A push-through conveyor frame as claimed in claim 5, wherein said supporting beam (34) is substantially constructed from wood, synthetic resin, or metal.

7. A push-through conveyor frame as claimed in claim 1, wherein said chain (40-48) is provided over substantially its entire length with fixation points (46) arranged on each chain link.

8. A push-through conveyor frame as claimed in claim 1, wherein each link of said chain is built up from link modules (42, 44) consecutively arranged in transverse direction of the track, while said fixation points (46) are positioned between consecutive link modules as well as at the ends thereof each time.

9. A push-through conveyor frame as claimed in claim 1, wherein the two tracks (30,32) are provided with rollers (62, 64) for supporting the outer sides of the pallets along the pallet tracks.

10. A push-through conveyor frame as claimed in claim 9, wherein said roller tracks (30,32) are constructed as roller chains.

11. A push-through conveyor frame as claimed in claim 1, wherein said drive means (34, 40-48) are arranged so as to have a sloping angle towards a supply position and/or delivery position of the push-through conveyor frame.

12. An assembly kit suitable for building up a push-through conveyor frame as claimed in claim 1 in combination with an assembly provided with stationary components.

## Patentansprüche

1. Durchdrückförderergerüst zum Aufnehmen von Stapelplatten (20, 28) aus einem Stapelplattenmaterial in Stapelplattenpositionen, die Bahnen (30, 32) mit einer Bahnachse entlang organisiert sind, und wobei die Stapelplatten (20, 28) zwei Außenseiten in einer quer zu der Bahnachse verlaufenden Richtung aufweisen, wobei zwei Bahnen (30, 32) die aufgenommenen Stapelplatten den jeweiligen zwei Außenseiten davon benachbart stützen, und wobei das Durchdrückförderergerüst ferner mit Antriebsmitteln (34) zum aneinander Angleichen der Bewegungen der Stapelplatten (20, 28) in zumindest einer der Bewegungsrichtungen der Stapelplatten die Bahnen entlang versehen ist,
**dadurch gekennzeichnet, dass** die Antriebsmittel (34, 40-48) eine Endloskette (40-48) umfassen, die unter den Stapelplattenpositionen in einer Zwischenposition zwischen den zwei Bahnen (30, 32) vorhanden ist, und die mit Fixierungspunkten (46) versehen ist, welche imstande sind, das Stapelplattenmaterial in Aufwärtsrichtung zu durchdringen, und **dadurch** Bewegungen von aufeinander folgenden Stapelplatten (20, 28) in Bezug zueinander entgegenwirken, während die Bahnen (30, 32), die die aufgenommenen Stapelplatten an den Außenseiten davon stützen, von derartigen Fixierungspunkten frei sind, wobei die Kette eine oder mehrere Rollen (42, 44) pro Glied umfasst, wobei die Rolle bzw. Rollen auf einer gemeinsamen Welle (40) in der Querrichtung vorgesehen ist bzw. sind, wobei eine Stützbahn (50) für die Gliedrollen zum Zweck des Tragens eines Teils des Stapelplattengewichts vorgesehen ist, und wobei Rillen (66, 68) in axialer Richtung der Bahn für die Wellen (40) der Gliedrollen eine Rückkehrbahn entlang vorgesehen sind, um die Glieder eine im Wesentlichen gerade Linie entlang zu führen.

2. Durchdrückförderergerüst nach Anspruch 1, wobei die Antriebsmittel (34) nur eine derartige Kette (40-48) umfassen, die im Wesentlichen die Länge der Bahnen (30, 32) entlang verläuft.

3. Durchdrückförderergerüst nach Anspruch 1, wobei die Durchdringungswirkung durch das Gewicht einer beladenen Stapelplatte (20, 28) und/oder die Biegebewegung davon in Gang gesetzt ist.

4. Durchdrückförderergerüst nach Anspruch 1, wobei sich die Kette (40 bis 48) im Wesentlichen mittig zwischen zwei Außenseiten der Stapelplatten (20, 28) befindet.

5. Durchdrückförderergerüst nach Anspruch 1, wobei die Kette (40 bis 48) in einen Auflageträger (34) vertieft liegt.

6. Durchdrückförderergerüst nach Anspruch 5, wobei der Auflageträger (34) im Wesentlichen aus Holz, Kunstharz oder Metall gebaut ist.

7. Durchdrückförderergerüst nach Anspruch 1, wobei die Kette (40 bis 48) über im Wesentlichen ihre Gesamtlänge hinweg mit Fixierungspunkten (46) versehen ist, die an jedem Kettenglied angeordnet sind.

8. Durchdrückförderergerüst nach Anspruch 1, wobei jedes Glied der Kette aus Gliedmodulen (42, 44) aufgebaut ist, die aufeinander folgend in der Querrichtung der Bahn angeordnet sind, während die Fixierungspunkte (46) zwischen aufeinander folgenden Gliedmodulen sowie jedes Mal an den Enden davon angeordnet sind.

9. Durchdrückförderergerüst nach Anspruch 1, wobei die zwei Bahnen (30, 32) mit Rollen (62, 64) zum Stützen der Außenseiten der Stapelplatten die Stapelplattenbahnen entlang versehen sind.

10. Durchdrückförderergerüst nach Anspruch 9, wobei die Rollenbahnen (30, 32) als Rollenketten gebaut sind.

11. Durchdrückförderergerüst nach Anspruch 1, wobei die Antriebsmittel (34, 40-48) derart angeordnet sind, dass sie einen schrägen Winkel zu einer Zufuhrposition und/oder Abfuhrposition des Durchdrückförderergerüsts aufweisen.

12. Aufstellungssatz, der zum Aufbauen eines Durchdrückförderergerüsts nach Anspruch 1 geeignet ist, in Kombination mit einer Aufstellung, die mit ortsfesten Komponenten versehen ist.

## Revendications

1. Châssis de convoyeur à poussée pour recevoir des palettes (20, 28) d'un matériau de palette dans des positions de palette qui sont organisées le long de voies (30, 32) présentant un axe de voie et les palettes (20, 28) ont deux côtés extérieurs dans un sens transversal à l'axe de la voie, dans lequel deux voies (30, 32) soutiennent les palettes reçues dans le voisinage des deux côtés extérieurs de celles-ci et dans lequel ledit châssis de convoyeur à poussée est en outre muni d'un moyen d'entraînement (34) pour égaliser mutuellement les mouvements des palettes (20, 28) dans au moins un des sens de mouvement des palettes le long des voies,
**caractérisé en ce que** lesdits moyens d'entraînement (34, 40-48) comprennent une chaine continue (40-48) qui est présente sous les positions de palette dans une position intermédiaire entre les deux voies (30, 32) et qui est munie de points de fixation (46) qui sont capables de pénétrer le matériau de palette dans un sens vers le haut et agissent ainsi contre les mouvements des palettes (20, 28) consécutives l'une par rapport à l'autre, alors que les deux voies (30, 32) qui soutiennent les palettes reçues sur les côtés extérieurs de celles-ci sont exemptes de tels points de fixation, dans lequel ladite chaîne comprend un ou plusieurs rouleaux (42, 44) par lien, lequel ou lesquels rouleau(x) est ou sont muni(s) d'une tige (40) commune dans ledit sens transversal, dans lequel une voie de soutien (50) est prévue pour lesdits rouleaux de lien afin de supporter une partie du poids de la palette et dans laquelle des rainures (66, 68) sont prévues dans le sens axial de la voie pour les tiges (40) desdits rouleaux de lien le long d'une voie de retour de façon à guider les liens le long d'une ligne essentiellement droite.

2. Châssis de convoyeur à poussée selon la revendication 1, dans lequel ledit moyen d'entraînement (34) comprend une seule telle chaîne (40-48) qui s'étend essentiellement le long de la longueur des voies (30, 32).

3. Châssis de convoyeur à poussée selon la revendication 1, dans lequel l'effet de pénétration est activé par le poids d'une palette chargée (20, 28) et/ou le mouvement de courbure de celle-ci.

4. Châssis de convoyeur à poussée selon la revendication 1, dans lequel ladite chaîne (40-48) est située essentiellement centralement entre lesdits côtés extérieurs des palettes (20, 28).

5. Châssis de convoyeur à poussée selon la revendication 1, dans lequel ladite chaîne (40-48) est reçue dans une poutre de support (34).

6. Châssis de convoyeur à poussée selon la revendication 5, dans lequel ladite poutre de support (34) est essentiellement construite en bois, en résine synthétique ou en métal.

7. Châssis de convoyeur à poussée selon la revendication 1, dans lequel ladite chaîne (40-48) est munie sur essentiellement toute sa longueur de points de fixation (46) agencés sur chaque lien de chaîne.

8. Châssis de convoyeur à poussée selon la revendication 1, dans lequel chaque lien de ladite chaîne est constitué de modules de liens (42, 44) agencés de manière consécutive dans le sens transversal à la voie, alors que lesdits points de fixation (46) sont placés entre des modules de lien consécutifs ainsi que sur les extrémités de ceux-ci à chaque fois.

9. Châssis de convoyeur à poussée selon la revendication 1, dans lequel les deux voies (30, 32) sont munies de rouleaux (62, 64) pour soutenir les côtés extérieurs des palettes le long des voies de palette.

10. Châssis de convoyeur à poussée selon la revendication 9, dans lequel lesdites voies de rouleau (30, 32) sont construites comme des chaînes à rouleau.

11. Châssis de convoyeur à poussée selon la revendication 1, dans lequel lesdits moyens d'entraînement (34, 40-48) sont agencés de manière à avoir un angle en pente vers une position d'alimentation et/ou d'alimentation du châssis de convoyeur à poussée.

12. Kit d'assemblage convenant à la construction d'un châssis de convoyeur à poussée selon la revendication 1 en combinaison avec un assemblage muni de composants fixes.
